# EUROPEAN PATENT APPLICATION

(11) **EP 4 803 277 A1**
(43) Date of publication of application: **09.09.2026**
(21) Application number: 26161248.5
(22) Date of filing: 27.02.2026
(51) Int. Cl.: B26D 5/00, B26F 1/38, B23Q 5/027

(54) **CUTTING HEAD FOR CARTESIAN MACHINING CENTRES**

(30) Priority: 03.03.2025 IT 202500004302
(71) Applicant: SCM Group S.p.A., 47921 Rimini (RN) (IT)
(72) Inventor: SAVORELLI, Livio, 47921 Rimini (RN) (IT)
(74) Representative: Gallo, Gianluca

(57) **Abstract**

Described is a cutting head (100) for Cartesian machining centres (1) designed to perform a cutting action on a semiproduct, which is, in particular, planar in shape. It comprises a supporting frame (101) configured to be connected to a drive motor (2), a mechanical transmission (102) that converts the rotary motion of the drive motor (2) into a linear reciprocating motion, and an oscillating cutting blade (103) driven by the mechanical transmission (102). The mechanical transmission (102) is configured to be switchable between two configurations, wherein the cutting blade (103) has different amplitudes of oscillation. The adjustment allows the amplitude of the oscillation to be adapted according to the characteristics of the semiproduct.

## Description

The present invention relates to a cutting head for Cartesian machining centres, a Cartesian machining centre for machining semiproducts which are planar in shape comprising such a cutting head and a method for machining semiproducts which are planar in shape, in particular which can be operated by means of the above-mentioned Cartesian machining centre. In the present description, the term "semiproducts" is intended to mean materials or components subjected to one or more preliminary machining steps, which need further treatments in order to be completed. Such semiproducts include, by way of example, but are not limited to, materials such as rubbers (both natural and synthetic), foam (foams of various polymers such as polyurethane or polystyrene), natural or processed wood, wood-derived panels (for example, MDF, plywood or chipboard), leather, and any other material suitable for processing by cutting, shaping or other processing techniques. Also, the expression "planar in shape" means that the semiproducts have a geometry in which one of the dimensions (the thickness) is significantly smaller than the other two dimensions (length and width), such as to give them a mainly flat or two-dimensional shape. In other words, the semiproduct has a reduced thickness with respect to the length and width, which are approximately of comparable dimensions to each other, determining a prevailing surface with respect to the thickness of the material itself.

In the sector relating to the present invention, Cartesian machining centres are known which are configured to perform machining on the above-mentioned semiproducts which are planar in shape. These machining centres generally comprise an oscillating cutting head, configured to perform a cutting action on the semiproduct. The head is driven by a drive motor, preferably an electrospindle, which is connected to or integrated with the head itself to generate the oscillating movement necessary for the cutting.

The machining centre also includes a supporting structure, which may be fixed or movable, for example with a portal configuration, and which is designed to support both the cutting head and the drive motor. A work table is present to receive and support the semiproduct during the machining. In order to ensure the relative movement between the cutting head and the work table, the multiaxis movement system is configured to move the supporting structure or the work table itself. Finally, a central control unit is responsible for managing and coordinating the operations of the machining centre, adjusting the movements of the various components according to the specific parameters of the machining.

In the context of these machining centres, it is common for cutting heads to be replaceable, as each cutting head is designed to work with a specific material, thickness, or density. The possibility of mounting different cutting heads allows optimisation of the machining according to the needs of the semiproduct, such as the type of material, its thickness or its density. In particular, for each type of material or thickness, a head with specific characteristics is mounted, adapting to the needs of the cutting process.

The Applicant has observed that, despite being widely used, the known Cartesian machining centres present a series of functional and/or structural problems that make their use not without drawbacks. One of the main critical issues lies in the low versatility of the cutting heads. In fact, whenever the nature of the semproduct changes, it is necessary to replace the cutting head to adapt it to the new characteristics of the material, such as type, thickness or density. This requires a high investment in terms of time and resources, as each head change operation involves not only the direct intervention of the operator, but also the need to have a wide range of heads to cover the various configurations of the materials. This continuous replacement process can lead to drawbacks related to specialised labour: the presence of complex manual operations, carried out by qualified technicians, not only increases the risk of human errors, but also requires a continuous updating of the necessary professional skills. The management of a set of different heads results in an increase in the assortment and management costs, since it is necessary to maintain a large inventory of specific components for each type of semiproduct. In addition, the process of replacing the heads, combined with the variability of the material machined, introduces risks of damage: both the heads themselves and the connection mechanisms can suffer frequent deterioration due to a prolonged use or a non-optimum installation. Further, from a functional point of view, the need to modify the head every time the type of semiproduct is changed implies a significant slowing down in production times, thus compromising the overall operational efficiency. In addition, the inability to quickly and dynamically adapt the head to the specifications of the material machined can reduce the quality of the cut and introduce inefficiencies in the machining, resulting in additional costs for the correction of errors or for the optimisation of the operations. These structural and functional problems therefore limit the effectiveness of Cartesian machining centres, especially in highly variable production environments, where flexibility and speed are fundamental.

In this context, the technical task of the present invention is therefore to provide a cutting head for Cartesian machining centres, a Cartesian machining centre for machining semiproducts which are planar in shape comprising such a cutting head and a method for machining semiproducts which are planar in shape, which overcome the drawbacks of the prior art. The aim of the present invention is therefore to provide a cutting head for Cartesian machining centres, a Cartesian machining centre for machining semiproducts which are planar in shape comprising such a cutting head and a method for machining semiproducts which are planar in shape that are able to overcome the functional and structural limitations of the prior art systems, improving operational versatility, reducing head change times, optimising management costs and increasing the overall efficiency of the machining process.

The specified technical task and the specified aim are substantially achieved by a cutting head for Cartesian machining centres, configured to operate a cutting action on a semiproduct which is planar in shape, comprising the technical characteristics set forth in Claim 1 and/or in one or more of the claims dependent thereon and/or in the attached description and by a Cartesian machining centre for machining semiproducts which are planar in shape comprising such a cutting head and the technical characteristics set forth in Claim 9. The specified technical task and the specified aim are also achieved by a method for machining semiproducts which are planar in shape, in particular which can be operated with a Cartesian machining centre comprising the features set forth in the Claims 10 and/or in one or more of the claims dependent thereon. In particular, this method is preferably operated by means of the above-mentioned Cartesian machining centre and will therefore be described with reference to said Cartesian machining centre.

The Cartesian machining centre comprises the cutting head configured to operate a cutting action on a semiproduct which is planar in shape and a drive motor of the cutting head, preferably an electrospindle, connected to or integral with the cutting head. The Cartesian machining centre includes a supporting structure configured to support the cutting head and the drive motor and a work table, configured to receive and support the semiproduct. The Cartesian machining centre comprises a multiaxis movement system, connected to the supporting structure and the work table, and configured to move the supporting structure or the work table so as to achieve a relative movement between the cutting head and the work table and a central control unit, configured to control and command the Cartesian machining centre.

The cutting head comprises a box-shaped supporting frame, configured to be connectable to the above-mentioned drive motor.

The cutting head comprises a mechanical transmission, coupled to the supporting frame. In particular, the mechanical transmission can be at least partially housed inside the supporting frame. Further, the mechanical transmission may be configured to be connectable to the drive motor. The mechanical transmission is suitable for converting a rotary motion generated by the drive motor into a linear reciprocating motion which it transmits to an oscillating cutting blade.

The cutting head therefore comprises an oscillating cutting blade, operatively connected to the mechanical transmission and configured to be actuated by the latter according to the linear alternating motion.

According to a particular aspect of the present invention, the mechanical transmission is configured to be selectively switchable at least between a first configuration, wherein the oscillating cutting blade is moved according to a first amplitude of oscillation, and a second configuration, wherein the oscillating cutting blade is moved according to a second amplitude of oscillation, different from the first amplitude of oscillation. In other words, the mechanical transmission of the cutting head is designed so that it can change its operating configuration, allowing the amplitude of oscillation of the cutting blade to be changed. This means that, depending on the needs of the semiproduct, it is possible to switch from a configuration in which the cutting blade oscillates with a certain amplitude, to another configuration in which the amplitude of oscillation changes, better adapting to the characteristics of the material to be machined, such as its density, thickness or type.

Advantageously, this technical feature represents a significant improvement over the prior art, as it allows the cutting head to be adapted to the various types of semiproducts without having to physically replace the cutting head itself. Advantageously, the adoption of a switchable mechanical transmission, which allows the amplitude of oscillation of the cutting blade to be varied without replacement interventions, allows the machine downtime to be reduced and minimises the risk of errors or damage during the replacement steps. Moreover, the possibility of easily changing the amplitude of the oscillation allows a wider variety of materials to be machined without having to continuously purchase and manage different cutting heads. This leads to reduction in the assortment costs and more efficient resource management.

At the functional level, therefore, the method comprises positioning a semiproduct on the work table. Subsequently, the cutting head and/or the semiproduct are reciprocally moved along a predetermined trajectory, through the action of the multiaxis movement system. Prior to or at the same time as these steps, the amplitude of oscillation of the cutting blade is adjusted, based on at least one physical parameter of the semiproduct, which can include the type of material, its thickness and/or its density, thus optimising the cutting process according to the specific characteristics of the material machined.

The cutting head, the Cartesian machining centre and/or the method according to the present invention may further provide one or more of the technical aspects that will be outlined below.

According to one aspect, in the first configuration the amplitude of oscillation of the oscillating cutting blade may be the lowest possible amplitude of oscillation, while in the second configuration the amplitude of oscillation of the oscillating cutting blade may be the highest possible amplitude of oscillation. In other words, in the first configuration, the cutting blade oscillates with the minimum possible amplitude granted by the mechanical transmission, while in the second configuration, the oscillation is the maximum possible amplitude granted by the mechanical transmission.

In some embodiments, the minimum amplitude of oscillation could be zero. In other words, in some embodiments, the minimum amplitude of oscillation could correspond to a position in which the cutting blade does not oscillate at all, being immobile.

According to a particularly advantageous embodiment, the mechanical transmission may be configured to be selectively switchable between a plurality of intermediate configurations comprised between the first configuration and the second configuration, each associated with a respective amplitude of oscillation of the oscillating cutting blade. In other words, the mechanical transmission may be able to select various intermediate stages between the minimum and the maximum amplitude of oscillation, thus allowing a wide variety of amplitudes of oscillation.

According to an embodiment, the mechanical transmission can be configured to continuously vary the amplitude of oscillation between the first configuration and the second configuration. In other words, the mechanical transmission can be designed to continuously adjust the amplitude of oscillation of the blade, allowing a fluid variation between the minimum and the maximum amplitude without interruptions.

According to an alternative embodiment, the mechanical transmission can provide a series of different configurations, in which the amplitude of oscillation of the blade can be varied in specific steps, without continuous variation but only in precise intervals.

According to one aspect, regardless of the number of configurations which can be obtained from the mechanical transmission, the cutting head may further comprise an actuator, connected to the mechanical transmission and configured to selectively switch the mechanical transmission at least between the two above-mentioned configurations. In other words, the actuator may be a component that connects to the mechanical transmission and has the task of changing the configuration of the mechanical transmission. This allows the amplitude of the oscillation to be adjusted without the manual intervention of the operator directly on the mechanical transmission itself. Advantageously, the use of an actuator offers numerous advantages, including a greater precision and speed in switching between the desired configurations. This reduces the machine downtimes and the need for manual interventions, making the machining process smoother.

In alternative embodiments, however, the configuration of the mechanical transmission could be modified directly by an operator, who intervenes directly on the mechanical components of the mechanical transmission.

According to one aspect, regardless of the presence of the above-mentioned actuator, the mechanical transmission may comprise various types of mechanisms for converting the rotary motion transmitted by the drive motor into a linear alternating motion.

According to a particularly advantageous embodiment, the mechanical transmission may comprise a crank and lever mechanism, connected to the oscillating cutting blade. In this embodiment, if present, the actuator is operatively connected to the crank and lever mechanism for selecting and adjusting the amplitude of oscillation.

For example, the actuator may change the relative position of the crank relative to the lever by moving the connecting pin. This alters the angle of oscillation of the crank, varying the transfer of motion to the cutting blade. In this way, the amplitude of the stroke can be controlled without changing the length of the crank or the overall geometry of the system.

For example, the actuator can adjust the stroke of the cranks, changing the radius of rotation of its point of attachment. By increasing the radius, the stroke of the cutting blade is extended; by reducing it, it is shortened.

For example, the actuator can act on the length of the cranks.

According to alternative embodiments, the mechanical transmission may comprise a cam mechanism, a worm mechanism, an eccentric mechanism, yielding mechanisms, and/or a rack and pinion mechanism.

According to one aspect, if present, the actuator can act on the mechanical transmission in a manual, automatic or fully automated manner.

According to a first embodiment, the actuator is a manual actuator, which has a portion protruding from the supporting frame, configured to be manipulated by an operator to selectively switch the mechanical transmission at least between the above-mentioned configurations. In other words, the operator, by means of a direct physical interaction with the actuator, can vary the amplitude of oscillation of the cutting blade by selecting one of the predefined configurations. This type of actuator allows a simple and immediate adjustment, although requiring the manual intervention of the operator.

According to a further embodiment, the actuator is an automatic actuator and comprises a regulation motor, operatively connected to the mechanical transmission and configured to selectively switch the mechanical transmission at least between the above-mentioned configurations, and a user interface, connected to the regulation motor and configured to operate the regulation motor.

According to a further embodiment, the actuator is an automated actuator and comprises a regulation motor, operatively connected to the mechanical transmission and configured to selectively switch the mechanical transmission at least between the above-mentioned configurations, a control unit, operatively connected to the regulation motor and configured to receive and process control signals to command the regulation motor, and a user interface, connected to the control unit and configured to receive commands from an operator and to transmit respective control signals to the control unit. Preferably, the commands received from the user interface are representative of at least one physical parameter of the semiproduct to be machined, selected from: type of material, thickness and/or density. The control unit is then configured to process said control signals and automatically determine the optimum amplitude of oscillation of the oscillating cutting blade as a function of the selected parameter. In essence, the user interface allows the operator to enter parameters such as the type of material, thickness or density of the semiproduct to be machined. This data is then sent to the control unit, which processes it to automatically determine what should be the most appropriate amplitude of oscillation for the cutting blade. In other words, the system automatically adjusts the blade according to the physical characteristics of the semiproduct, thus optimising the cutting process without requiring continuous manual interventions by the operator. In this regard, the control unit may be provided with a memory module in which specific oscillation configurations are stored for each type of material, thickness, density or combination of these parameters. In practice, for each physical variable of the semiproduct and/or for each combination of physical variables, a predefined amplitude of oscillation is associated for the cutting blade. Each amplitude corresponds to a specific configuration of the mechanical transmission, which regulates the alternating motion of the cutting blade, thus ensuring that the cutting process is always optimised according to the characteristics of the material processed. The control unit can be an ad hoc control unit or integrated or connected to the central control unit of the Cartesian machining centre. According to a particularly advantageous embodiment, the system may include one or more detection devices, integrated in the Cartesian machining centre, configured to acquire in real time at least one physical parameter of the semiproduct to be machined, such as type of material, thickness and/or density. Such detection devices, which may comprise optical, capacitive, ultrasonic or mechanical sensors (for example, thickness gauges), are operatively connected to the control unit and automatically transmit the data detected to the latter. The control unit, by using the memory module in which the predefined amplitudes of oscillation configurations are stored, processes the input signals and dynamically determines the optimum amplitude of the oscillating cutting blade, adapting it to the actual characteristics of the semiproduct detected during the machining operations. This approach allows an adaptive and closed cycle adjustment of the mechanical transmission, without the need for manual intervention by the operator. The adjustment motor, activated by the control unit, selectively switches the configuration of the mechanical transmission based on the parameters processed, continuously optimising the cutting process even in the presence of variations of the semiproduct. This integration guarantees high operational accuracy, reducing the setup times and improving the adaptability of the system to heterogeneous working conditions, with a significant increase in overall efficiency.

Clearly, regardless of whether the actuator is manual, automatic or fully automated, the actuator is designed to keep the selected set-up of the mechanical transmission stable. Once the amplitude of oscillation of the cutting blade is adjusted, the configuration adopted by the mechanical transmission remains unchanged until it is modified again. This means that the actuator, while allowing an adjustment of the amplitude of oscillation, is designed to ensure that the position reached remains stable and resistant to unintentional variations, such as those that could result from vibrations or mechanical stresses during the cutting operation. In other words, the selected set-up is maintained in a firm and durable manner, and the mechanical transmission can operate in a stable configuration without the risk of accidental displacements, until it is decided to change the set-up again. This feature contributes to ensuring a precise and reliable machining process, minimising the need for frequent interventions during the operational steps.

Further characteristics and advantages of the present invention will become clearer from the indicative, and therefore non-limiting, description of a preferred embodiment of a cutting head for Cartesian machining centres, configured to operate a cutting action on semiproducts, which are, in particular, planar in shape, according to the present invention.

This description is set out below with reference to the accompanying drawings which are provided solely for illustrative and therefore non-limiting purposes, in which:
- Figure 1 illustrates a schematic view of an example embodiment of a Cartesian machining centre for machining semiproducts which are planar in shape, according to the present invention;
- Figure 2 illustrates a schematic view of a first preferred and therefore non-limiting embodiment of a cutting head according to the present invention;
- Figures 3a-3c illustrate a schematic view of a second preferred and therefore non-limiting embodiment of a cutting head according to the present invention.

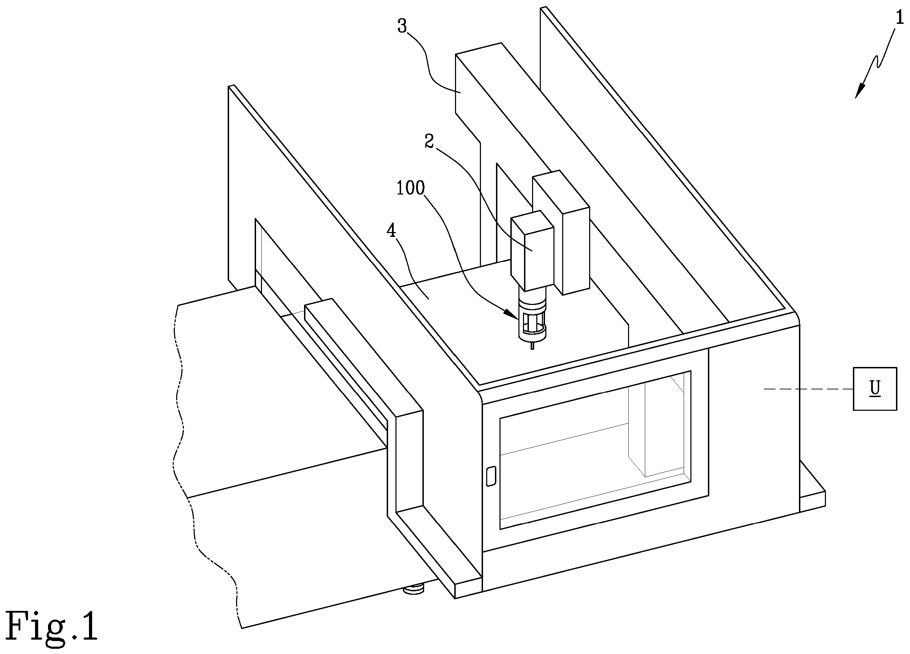

The reference numeral "1" in Figure 1 denotes a Cartesian machining centre for the processing of semiproducts which are planar in shape according to the present invention. The Cartesian machining centre 1 comprises a cutting head 100 (which also forms part of the present invention) configured to operate a cutting action on a semiproduct which is planar in shape, and a drive motor 2 of the cutting head 100, preferably an electrospindle, connected to or integral with said cutting head 100. The Cartesian machining centre 1 comprises a supporting structure 3 configured to support the cutting head 100 and the drive motor 2, and a work table 4, configured to receive and support the semiproduct. The Cartesian machining centre 1 therefore comprises a multiaxis movement system (not illustrated), connected to the supporting structure 3 and to the work table 4 and configured to move the supporting structure 3 or the work table 4 so as to achieve a relative movement between the cutting head 100 and the work table 4, and a central control unit "U", configured to control and command the Cartesian machining centre 1.

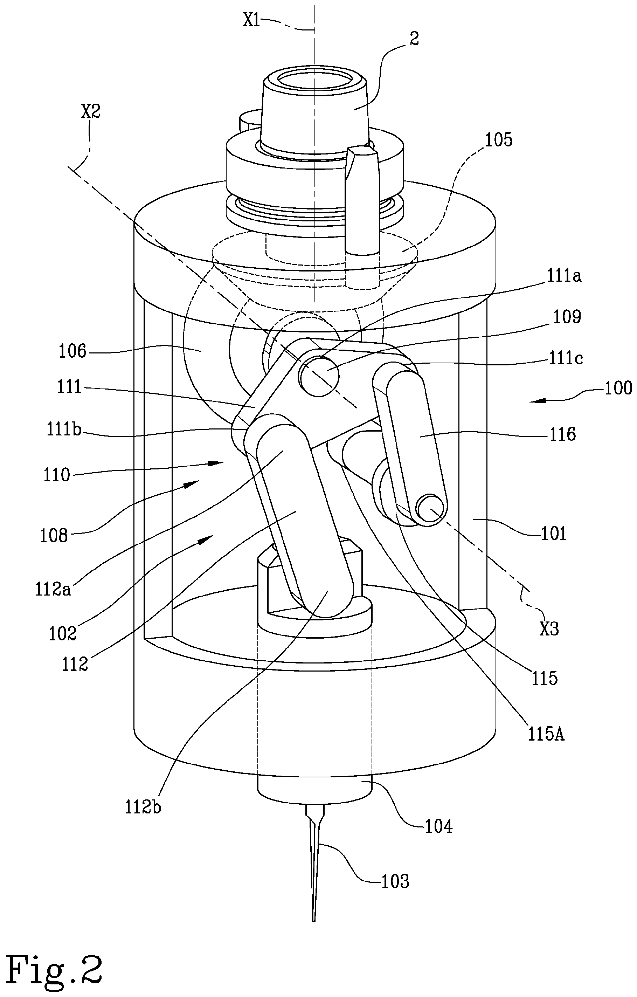

Figure 2 illustrates a first embodiment of the cutting head 100 according to the present invention.

The cutting head 100 comprises a supporting frame 101, for example having a box-like shape, configured to be connectable to the above-mentioned drive motor 2. In particular, the supporting frame 101 has a substantially cylindrical shape.

The cutting head 100 comprises a mechanical transmission 102, at least partially housed inside the supporting frame 101 and configured to be connectable to the drive motor 2: the mechanical transmission 102 is adapted to convert a rotary motion generated by the drive motor 2 into a linear alternating motion.

The cutting head 100 comprises an oscillating cutting blade 103, operatively connected to the mechanical transmission 102 and configured to be actuated by the latter according to the linear alternating motion. Preferably, the cutting blade is supported by a supporting element 104.

The mechanical transmission 102 comprises a conical pair 105, 106 consisting of a first conical element 105 and a second conical element 106. The first conical element 105 is connected to the drive motor 2 and transfers the rotary motion to the second conical element 106 through a conical coupling. The second conical element 106, in turn, is configured to transmit the rotation to a crank and lever mechanism 108, converting the axis of rotation from vertical to horizontal. The first conical element 105 rotates around a first axis of rotation "X1" while the second conical element 106 rotates around a second axis of rotation "X2", substantially transversal to the first axis of rotation "X1".

Figure 2 illustrates a first embodiment of the crank and lever mechanism 108, which is connected to the cutting blade 103 and is suitable for converting the rotary motion transmitted by the conical pair 105, 106 into the linear alternating motion, with which the cutting blade 103 is moved.

The crank and lever mechanism 108 comprises a crank 109, fixed to the second conical element 106, in an eccentric position with respect to the second rotation axis "X2". The crank and lever mechanism 108 comprises a composite lever 110 comprising a triangular body 111 and a rod-shaped body 112. The triangular body 111 has a first vertex 111a hinged to the crank 109. The triangular body 111 has a second vertex 111b hinged to the rod-shaped body 112, which has a first end 112a hinged to the second vertex 111b of the triangular body 111 and a second end 112b, opposite the first end 112a, hinged to the supporting element 104 of the cutting blade 103.

The cutting head 100 therefore comprises a manual actuator 115, connected to the mechanical transmission 102 and configured to selectively switch the mechanical transmission 102 between at least two configurations, preferably a plurality of configurations, as described in detail below. In particular, the actuator 115 is substantially cylindrical in shape and is rotatably connected to the supporting frame 101. The actuator 115 is selectively rotatable about a respective third axis of rotation "X3". A connecting arm 116, which connects the actuator 115 to the third vertex 111c of the triangular body 111, is pivoted to the actuator 115, in an eccentric position with respect to the third axis of rotation "X3". By acting on this connection, the actuator 115 rotates and substantially modifies the overall length of the compound connecting rod 111, 112. By adjusting the position of the actuator 115, it is therefore possible to influence the amplitude of the oscillation transmitted by the compound connecting rod 111, 112 and, consequently, to the cutting blade 103, increasing or reducing its amplitude of oscillation, and therefore its stroke.

The actuator 115 has a portion 115a protruding from the supporting frame 101 of the cutting head 100, configured to be manipulated by an operator to selectively switch the mechanical transmission 102 at least between the above-mentioned configurations. Preferably, the protruding portion 115a can have graphic marks, for example a graduated scale, so that the operator can easily adjust the configuration of the mechanical transmission 102 and in particular the amplitude of oscillation of the cutting blade 103.

Preferably, the mechanical transmission 102 is configured to be selectively switchable at least between a first configuration, wherein the oscillating cutting blade 103 is moved according to a first amplitude of oscillation, and a second configuration, wherein the oscillating cutting blade 103 is moved according to a second amplitude of oscillation, different from the first amplitude of oscillation. In particular, in the first configuration, the amplitude of oscillation of the cutting blade 103 is the minimum amplitude of oscillation allowed by the mechanical transmission 102, while in the second configuration the amplitude of oscillation of the oscillating cutting blade 103 is the maximum amplitude of oscillation allowed by the mechanical transmission 102. Preferably, the mechanical transmission 102 is configured to be selectively switchable between a plurality of intermediate configurations comprised between the first configuration and the second configuration, each associated with a respective amplitude of oscillation of the cutting blade 103. Even more preferably, the mechanical transmission 102 is configured to continuously vary the amplitude of oscillation between the first configuration and the second configuration.

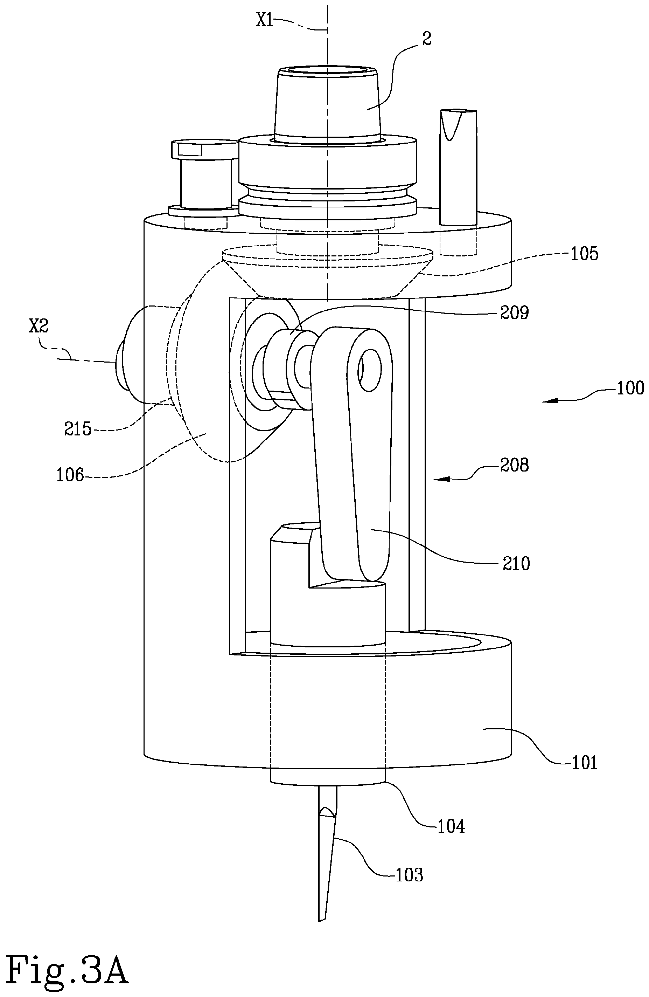

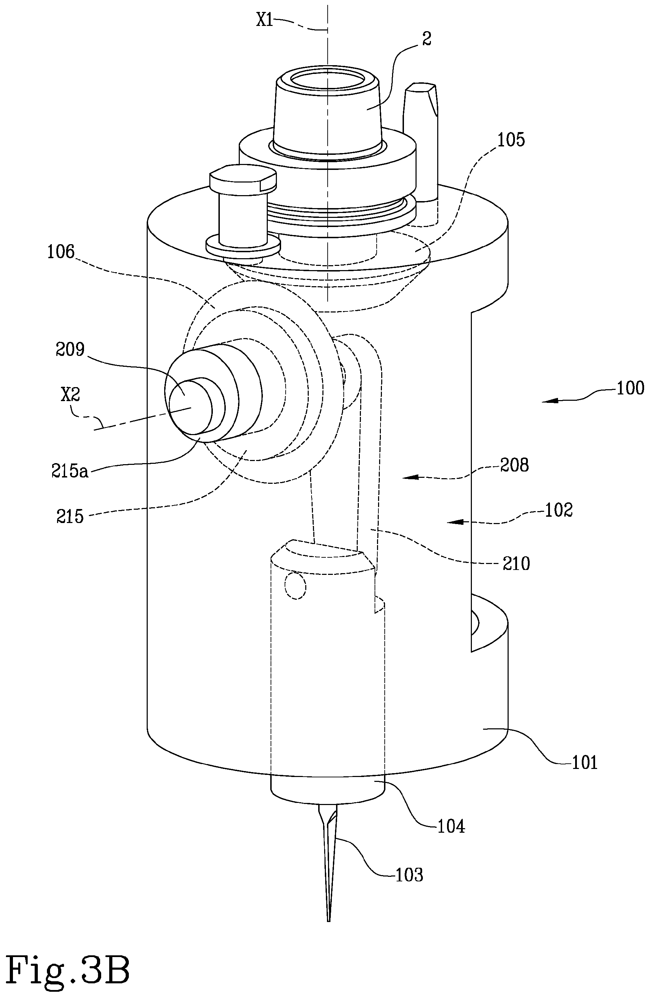

Figures 3a-3c illustrate a second embodiment of the cutting head 100 according to the present invention.

This embodiment differs from the embodiment of Figure 1 in terms of the structure of the mechanical transmission 102 and in terms of the structure of the actuator, which in this embodiment is indicated with reference numeral 215. The remaining components are substantially unchanged and therefore will be indicated with the same numerical reference as the first embodiment of the cutting head 100 illustrated in Figure 2.

Specifically, the actuator 215 is a substantially cylindrical element rotatably connected coaxially to the second conical element 106, so as to be able to rotate around the second axis of rotation "X2". The mechanical transmission 102 has a crank and lever mechanism 208, which is provided with a crank 209 and a lever 210. The crank 209 has a double eccentric shape and is stably connected eccentrically directly on the actuator 215 with respect to the second rotation axis "X2".

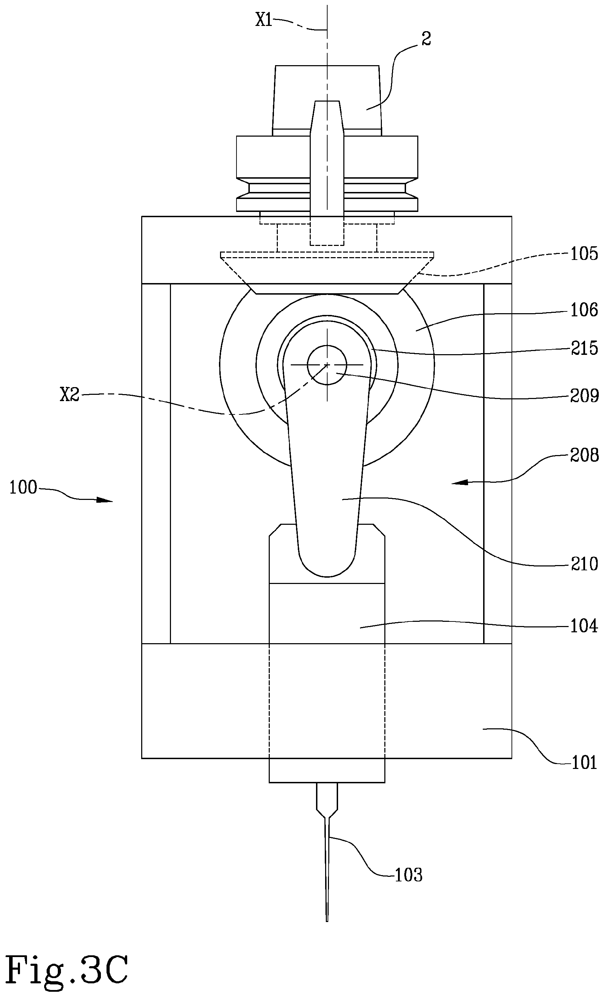

Functionally, the actuator 215 adjusts the stroke of the crank 209, changing the radius of rotation of its attachment point. In other words, varying the relative angular position between the actuator 215 and the crank 209 changes the length of the crank 209 itself and thus the stroke of the mechanism 102. By increasing the radius, the stroke of the cutting blade 103 is extended. As with the previous embodiment, the actuator 215 has a portion 215a protruding from the supporting frame 101 of the cutting head 100, configured to be manipulated by an operator to selectively switch the mechanical transmission 102 at least between the above-mentioned configurations. Preferably, as can be seen in detail in Figure 3C, when the mechanical transmission 102 adopts the first configuration, the amplitude of oscillation of the cutting blade 103 is zero.

The present invention also relates to a method for machining semiproducts which are planar in shape, in particular which can be operated with the above-mentioned Cartesian machining centre 1. The method involves positioning the semiproduct on the work table 4 and moving the cutting head 100 with respect to the semiproduct according to a predetermined trajectory by means of the multiaxis movement system. Clearly, the resulting reciprocal movement between the cutting blade 103 and the semiproduct is the sum of the tangential movement determined by the multiaxis movement system and, possibly, the linear alternating movement of the cutting blade 103 with respect to the semiproduct itself (if the amplitude of oscillation of the cutting blade 103 is not zero). The method provides for operating a cutting action on the semiproduct by means of the cutting blade 103. According to the invention, the method provides a step of adjusting an amplitude of oscillation of the cutting blade 103 as a function of at least one physical parameter of the semiproduct, selected from the type of material, its thickness and/or its density.

This step of adjusting the amplitude of oscillation of the cutting blade 103 can be carried out both before and at the same time as the above-mentioned cutting step. This step of adjusting the amplitude of oscillation of the cutting blade 103 is preferably carried out by switching an operating configuration of the mechanical transmission 102 by the actuator 115, 215. This step of adjusting the amplitude of oscillation of the cutting blade 103 is preferably operated manually by an operator.

The invention achieves the above-mentioned aims, eliminating the drawbacks highlighted in the prior art.

## Claims

1. A cutting head (100) for Cartesian machining centres (1), configured to perform a cutting action on semiproducts, which are, in particular, planar in shape, comprising:
- a supporting frame (101), configured to be connectable to a drive motor (2);
- a mechanical transmission (102), coupled to the supporting frame (101) and configured to be connectable to said drive motor (2), said mechanical transmission (102) being adapted to convert rotary motion generated by the drive motor (2) into reciprocating linear motion;
- an oscillating cutting blade (103), operatively connected to the mechanical transmission (102) and configured to be driven by the latter according to the reciprocating linear motion;
**characterized in that** the mechanical transmission (102) is configured to be selectively switchable at least between a first configuration, wherein the cutting blade (103) is moved according to a first amplitude of oscillation, and a second configuration, wherein the cutting blade (103) is moved according to a second amplitude of oscillation, different from the first amplitude of oscillation.

2. The cutting head (100) according to claim 1, further comprising an actuator (115, 215), connected to the mechanical transmission (102) and configured to selectively switch the mechanical transmission (102) at least between the aforesaid two configurations.

3. The cutting head (100) according to claim 1 or 2, wherein in the first configuration, the amplitude of oscillation of the cutting blade (103) is the minimum amplitude of oscillation allowed by the mechanical transmission (102), while in the second configuration, the amplitude of oscillation of the cutting blade (103) is the maximum amplitude of oscillation allowed by the mechanical transmission (102).

4. The cutting head (100) according to any one of the preceding claims, wherein the mechanical transmission (102) is configured to be selectively switchable between a plurality of intermediate configurations included between the first configuration and the second configuration, each associated with a respective amplitude of oscillation of the cutting blade (103); preferably the mechanical transmission (102) being configured to seamlessly vary the amplitude of oscillation between the first configuration and the second configuration.

5. The cutting head (100) according to any one of claims 2 to 4, wherein the mechanical transmission (102) comprises a crank and lever mechanism (108, 208), operatively connected to the cutting blade (103); preferably, the actuator (115, 215) being operatively connected to said crank and lever mechanism (108, 208) for selecting the amplitude of oscillation of the cutting blade (103).

6. The cutting head (100) according to any one of claims 2 to 5, wherein the actuator (115, 215) is a manual actuator, having a portion (115a, 215a) which protrudes from the supporting frame (101), configured to be operated by an operator to selectively switch the mechanical transmission (102) at least between the aforesaid configurations.

7. The cutting head (100) according to any one of claims 2 to 5, wherein the actuator (115, 215) is an automatic actuator, comprising:
- an adjustment motor, operatively connected to the mechanical transmission (102) and configured to selectively switch the mechanical transmission (102) at least between the aforesaid configurations;
- a user interface, connected to the adjustment motor and configured to drive said adjustment motor.

8. The cutting head (100) according to any one of claims 2 to 5, wherein the actuator (115, 215) is an automated actuator, comprising:
- an adjustment motor, operatively connected to the mechanical transmission (102) and configured to selectively switch the mechanical transmission (102) at least between the aforesaid configurations;
- a control unit, operatively connected to the adjustment motor and configured to receive and process control signals for driving said adjustment motor;
- a user interface, connected to the control unit and configured to receive commands from an operator and to transmit respective control signals to the control unit;
preferably, said commands received from the user interface being representative of at least one physical parameter of the semiproduct to be processed, selected from the following: thickness and/or density; said control unit being configured to process said control signals and to automatically determine the optimum amplitude of oscillation of the cutting blade (103) as a function of the selected parameter.

9. A Cartesian machining centre (1) for processing semiproducts, which are, in particular, planar in shape, comprising:
- a cutting head (100) according to any one of the preceding claims, configured to perform a cutting action on a planar-shaped semiproduct;
- a drive motor (2) for driving the cutting head (100), preferably an electrospindle, connected to or integral with said cutting head (100);
- a supporting structure (3) configured to support said cutting head (100) and said drive motor (2);
- a work table (4), configured to receive and support the semiproduct;
- a multiaxis movement system, connected to the supporting structure (3) and to the work table (4), and configured to move the supporting structure (3) or the work table (4) so as to perform a relative movement between the cutting head (100) and the work table (4);
- a central control unit (U), configured to control and drive said Cartesian machining centre (1).

10. A method for machining semiproducts, which are, in particular, planar in shape, in particular operable with a Cartesian machining centre (1) according to claim 9, comprising the following steps:
- positioning the semiproduct on a work table (4);
- moving a cutting head (100) relative to the semiproduct along a predetermined trajectory by means of a multiaxis movement system; said cutting head (100) comprising a cutting blade (103) which oscillates according to linear reciprocating motion;
- performing a cutting action on the semiproduct by means of the cutting blade (103);
**characterized in that** it comprises a step of adjusting an amplitude of oscillation of the cutting blade (103) as a function of at least one physical parameter of the semiproduct, selected from type of material, thickness and/or density.

11. The method according to claim 10,. wherein the step of adjusting the amplitude of oscillation of the cutting blade (103) is carried out by switching an operating configuration of the mechanical transmission connected to the cutting blade (103) and adapted to generate the linear reciprocating motion of the cutting blade (103).

12. The method according to claim 10 or 11, wherein the step of adjusting the amplitude of oscillation of the cutting blade (103) is carried out manually by an operator.

13. The method according to claim 10 or 11, wherein the step of adjusting the amplitude of oscillation of the cutting blade (103) is carried out automatically.

14. The method according to claim 10 or 11, wherein the step of adjusting the amplitude of oscillation of the cutting blade (103) is carried out in an automated manner.
